# EUROPEAN PATENT APPLICATION

(11) **EP 3 722 977 A1**
(43) Date of publication of application: **14.10.2020**
(21) Application number: 19168770.6
(22) Date of filing: 11.04.2019
(51) Int. Cl.: G06F 17/50

(54) **METHOD AND APPARATUS FOR GENERATING A DESIGN FOR A TECHNICAL SYSTEM OR PRODUCT**

(71) Applicant: Siemens Aktiengesellschaft, 80333 München (DE)
(72) Inventor: Hartmann, Dirk, 85617 Aßling (DE); Srivastava, Sanjeev, Princeton Junction, 08550 (US)

(57) **Abstract**

The invention relates to a computer-implemented method and apparatus for generating a design for a technical system or a product. Depending on a set of first parameters (P1), specifying physical properties, and second parameters (P2), specifying perceptible properties of the technical system or product, a design is generated for the technical system or product. A performance indicator (KPI1) that evaluates a physical performance of the generated design is obtained. The generated design of the technical system or product is presented to a user and perception data (PD) in response to the presentation of the generated design are measured by means of a perception capturing unit (105) and a perception evaluation indicator (KPI2) is deduced from the measured perception data. An optimized design is determined by iteratively (S6) optimizing the performance indicator (KPI1) and/or the perception evaluation indicator (KPI2) by means of an optimization algorithm. The method and apparatus enable an autonomous closed design loop taking human perception into account.

## Description

The present invention relates to a method and an apparatus for generating a design for a technical system or for a product in order to manufacture the technical system or part of the technical system or the product starting from said design.

Generating products or technical systems, preferably individualized products or technical systems, usually requires a design or composition, based on which the product or technical system can be manufactured. According to the state of the art, the design process of a product is usually split into at least two phases. First, the aesthetical shaping, e.g., forming the general shape or defining surface material of a car, is performed which usually depends on the creativity and/or preferences and/or perception of a designer or a user. Second, the functional and/or physical requirements are determined and/or designed, e.g. the aerodynamics of a car. Computer-aided engineering methods, i.e. design algorithms like generative design, can be applied to optimize the physical and/or functional design. The computer-aided design generation and optimization of a product design are usually based on mathematical algorithms and therefore usually focusses on physical design variables, as aesthetical or subjective variables are usually difficult to quantify. Thus, one of the limitations of current generative design methods is their focus on physical quantities.

It is therefore an objective of the present invention to improve the design process.

The object is solved by the features of the independent claims. The dependent claims contain further developments of the invention.

The invention provides according to the first aspect a computer-implemented method for generating a design for a technical system or for a product, comprising the following method steps:
(a) providing a set of first parameters specifying physical properties and second parameters specifying perceptible properties of the technical system or product,
(b) generating a design for the technical system or product depending on the set of first and second parameters,
(c) obtaining a performance indicator that evaluates a physical performance of the generated design,
(d) outputting a presentation of the generated design of the technical system or product by means of a user interface,
(e) measuring perception data in response to the presentation of the generated design by means of a perception capturing unit and deducing a perception evaluation indicator from the measured perception data,
(f) iteratively optimizing the performance indicator and/or the perception evaluation indicator by means of an optimization algorithm, wherein at least one first parameter and/or at least one second parameter is adjusted and the method steps (b) to (e) are repeated,
   and
(g) outputting an optimized design.

If not indicated differently the terms "calculate", "perform", "computer-implemented", "compute", "determine", "generate", "configure", "reconstruct", and the like, preferably are related to acts and/or processes and/or steps which change and/or generate data, wherein data can particularly be presented as physical data, and which can be performed by a computer or processor. The term "computer" can be interpreted broadly and can be a personal computer, server, pocket-PC-device, mobile computing device, a communication device which can process data, or a processor such as a central processing unit (CPU) or microprocessor.

An important advantage of the present invention is the integrated optimization of a design for a technical system, a part of a technical system or product taking perceptible and physical properties of the design into account. Furthermore, the preferences and/or taste of a user can automatically be considered without dedicated user input.

A technical system can for example be a device or a plant. A part of the technical system can comprise a subsystem, a component, or similar, configured as software and/or hardware. A product can for example be a work product or a manufactured product. In particular, the product can be a consumer product, preferably an individualized product.

A design of a technical system or product relates to a description or specification comprising physical, functional and/or aesthetical features of the technical system or product to be designed and manufactured. "Design" can hence be further understood as a plan or specification, e.g., a computer-aided drawing or model which is provided in a computer-readable format, comprising technical and additional, e.g., shaping, information for the production process.

The design is generated based on a set of given parameters. The design generation can for example be performed on a computer. First parameters specify physical and/or functional properties of the technical system or product to be designed. Second parameters specify properties which are perceptible by humans, i.e., by a user or designer. In other words, second parameters can comprise aesthetical features, e.g., optical appearance of a product. The generated design therefore comprises first and second parameters.

The generated design is presented to a human, e.g. a user or designer, using a user interface, such as a display. The design can for example be rendered as a computer-aided design (CAD) model and presented to the user. The human perception in response to the generated design, e.g., a user's reaction to the optical appearance of the design shown on the display, is measured by means of a perception capturing unit, e.g., a consumer electroencephalogram (EEG) or an eye-tracking-sensor. The perception capturing unit is preferably configured to transform human perception into measurable perception data.

The performance indicator is preferably obtained for a specific parameter, e.g., energy consumption or stiffness, and/or can be determined with respect to a specified performance threshold. The performance indicator and/or the perception evaluation indicator are optimized by means of an optimization algorithm, particularly a multi-objective optimization. An optimized design is determined by iteratively optimizing the performance indicator and/or the perception evaluation indicator. Preferably, a predefined threshold or limit can be set for the performance indicator and/or the perception evaluation if the optimization does not converge.

The combined optimization preferably allows to find a physically or functionally optimized design which is also attractive to a user. Inversely, an aesthetically optimized design, which might not be functionally optimized can be discarded.

The method according to the invention can be used for any kind of product design where visual or other perceptual aspects play a role. The physical or functional design objectives are advantageously expanded by including the product's or system's appearance or aesthetics. The method enables quantifying a product's aesthetics by measuring a user's perception in response to the product's design, such that the perception data can be combined with design objectives. Furthermore, the method enables a user or designer to generate an individualized design for a technical system or product. The design can further be evaluated and/or optimized based on the performance indicator and/or the perception evaluation indicator.

According to a preferred embodiment of the invention, a computer-aided physical or functional simulation of the technical system or product can be performed depending on the generated design and wherein the performance indicator is obtained from the computer-aided physical or functional simulation.

Using a computer-aided physical simulation, reproducing physical properties and/or constraints of the technical system or product, the design can be tested and/or evaluated. A functional optimization is an iterative process, which may require multiple simulations to achieve the desired end functionality of the design. Preferably, the generated or optimized design is outputted in a computer-readable format such that it can be used as an input for a computer-aided simulation. The performance indicator can be deduced from the computer-aided simulation. The performance indicator, which can also be called key performance indicator, can for example be a feature size or value.

According to a preferred embodiment of the invention, the presentation of the generated design can comprise a visualization and/or an olfactory test and/or a sound test and/or a haptic test.

The user's perception of the generated design can preferably be based on various types of presentations suitable for the type of technical system or product. The presentation is preferably provided by suitable presentation means, such as a screen or speakers.

According to a preferred embodiment of the invention, the optimization algorithm can comprise a heuristic method and/or a gradient-based method.

The optimization algorithm can for example also comprise a meta-heuristic method. Optimization can be based on a genetic algorithm or a gradient descent method. Gradient information is usually available for model-based approaches for the predictive physical models.

According to a preferred embodiment of the invention, the generated and/or optimized design can be stored in a storage unit or a database.

Stored designs can for example be reused or used as a starting point for further optimization steps or for presentation to another user. Furthermore, a design database can be used for comparison of the generated and/or optimized designs. A database of designs can be used as a data set for training an artificial intelligence for subsequent design generation or design selection.

According to a preferred embodiment of the invention, a weight can be allocated to the performance indicator and/or a weight is allocated to the perception evaluation indicator and the optimization is performed taking the respective weight into account.

Preferably a user or designer can choose different criteria for optimization and weights of different objectives. Therefore, an individualization of the design can be achieved by prioritization. A weight can for example be configured as a statistical weight.

According to a preferred embodiment of the invention, a variety of designs can be used as training data for training a machine learning method for determining an optimized design.

Furthermore, the respective assigned performance indicators and perception evaluation indicators for each of the designs of a variety of designs, e.g., generated and/or optimized designs, can be used as training data for training an artificial intelligence or machine learning method. A machine learning method can for example be at least one artificial neural network trained to output a preferred design or a design proposal based on user input data.

According to a preferred embodiment of the invention, the optimized design can be transferred to an additive manufacturing system for manufacturing the technical system or product by the additive manufacturing system using the optimized design.

Preferably the optimized design is outputted in a suitable, e.g., computer-readable, format in order to directly use it as input for a manufacturing machine.

The invention provides according to the second aspect an apparatus for generating a design for a technical system or a product, comprising:
- an interface unit configured to provide a set of first parameters specifying physical properties and second parameters specifying perceptible properties of the technical system or product,
- a design generator configured to generate a design for the technical system or product depending on the set of first and second parameters,
- a computing unit configured to obtain a performance indicator that evaluates the physical performance of the generated design,
- a user interface configured to output a presentation of the generated design of the generated design of the technical system or product,
- a perception capturing unit configured to measure perception data in response to the presentation of the generated design and to deduce a perception evaluation indicator from measured perception data,
- an optimization unit configured to iteratively optimize the performance indicator and/or the perception evaluation indicator by means of an optimization algorithm
   and
- an output unit configured to output an optimized design.

The apparatus and/or at least one of its units can further comprise at least one processor or computer to perform the method steps according to the invention. Furthermore, at least one of the respective units can be realized by means of cloud computing.

The respective unit, e.g. the interface device, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The interface unit can for example be configured as a keyboard, a database or storage access, or a port. The design generator preferably comprises a processor. A user interface can for example be a screen, an augmented reality device, a mixed reality device, speakers or an odor source or any device enabling a user interaction. A perception capturing unit can for example be an electroencephalogram (EEG) or an eye tracking system, preferably coupled to a processor. The output unit preferably provides a data structure or data format comprising the optimized design.

According to a preferred embodiment of the invention the computing unit can be configured to perform a computer-aided physical or functional simulation of the technical system or product depending on the generated design and to obtain a performance indicator from the computer-aided physical or functional simulation.

According to a preferred embodiment of the invention the apparatus can be connected to an additive manufacturing device.

Further the invention relates to a computer program product directly loadable into the internal memory of a digital computer, comprising software code portions for performing the steps of one of a method according to the invention when said product is run on a computer.

The invention further comprises a computer program product directly loadable into the internal memory of a digital computer, comprising software code portions for performing the steps of the said method when said product is run on a computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The invention will be explained in more detail by reference to the accompanying figures.
- Fig. 1: shows a flow chart including method steps involved in an embodiment of a computer-implemented method for generating a design for a technical system or a product;
- Fig. 2: shows a schematic representation of an embodiment of a computer-implemented method for generating a design for a technical system or a product; and
- Fig. 3: shows a schematic diagram of an embodiment of an apparatus for generating a design for a technical system or a product.

Equivalent parts in the different figures are labeled with the same reference signs.

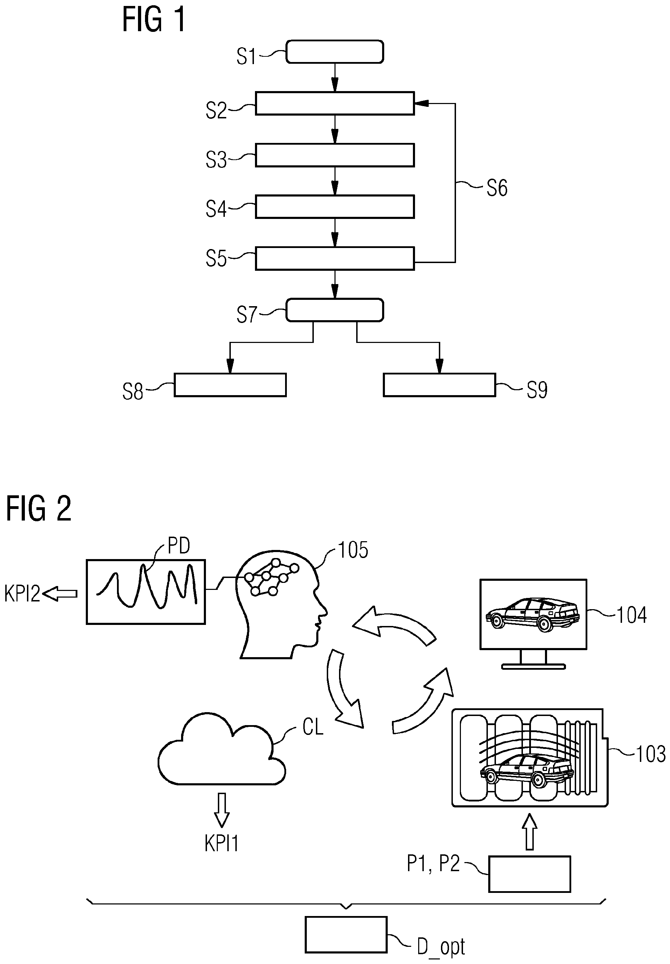

Figure 1 shows a flow chart of steps of the computer-implemented method according to the invention for generating a design for a technical system or a product.

The first step S1 involves providing a set of first and second parameters of the technical system or product. The first parameters specify physical and/or functional properties of the technical system or product. The second parameters specify perceptible properties of the technical system of product. In other words, second parameters describe properties of the technical system or product which can particularly be perceived or sensed by a human. The first parameters can also be perceived or sensed by a human, whereas the first parameters are preferably describing physical or functional features which determine the functionality of the technical system or product, e.g., elasticity, working temperature or material hardness. In other words, albeit first parameters predominantly specify functional or physical properties of a technical system or product, these properties can also be perceptible by a human.

The first and second parameters can for example be stored in a database or on storage medium and queried from there. Alternatively, first and/or second parameters can be (pre-)selected and set by a user or a program.

Based on the set of first and second parameters, a design is generated in the next step S2 by means of a design generator. The generation of the design comprises for example the drafting of a plan, model or specification comprising technical, functional and aesthetical features of the technical system or product to be designed and manufactured. The generated design can for example be outputted as a data structure. The generated design is particularly based on first and second parameters.

In the next step S3, a performance indicator that evaluates a physical performance of the generated design is obtained. Therefore, the performance is evaluated depending on the set of first and second parameters.

Preferably, based on the generated design, a physical or functional simulation is performed in order to obtain the performance indicator. In other words, using for example predictive models, e.g. simulation models, the generated design is evaluated, and a performance indicator is provided. Using for example an interactive simulation, physical behavior of the designed system or product can be simulated and evaluated. A performance indicator for a design for a car can for example refer to an energy consumption or aerodynamics.

In the next step S4, the generated design is presented to a user by means of a user interface. The presentation can also be shown in real-time or in parallel to performing the physical or functional simulation. Depending on the type of technical system or product, the presentation can comprise a visualization and/or an olfactory test and/or a sound test and/or a haptic test.

A visualization can for example be based on a computer-aided design (CAD) model which can be provided based on the given design. An olfactory test can for example be based on a specific material or substance used for the design and the corresponding odorous substance can be outputted by an olfactory output unit. A sound test can for example be provided by speakers. A haptic test can be based on a surface material used for the design. In order to provide the respective test, a database of appropriate sound, smell or sample material is preferably provided. The respective user interface depends on the type of presentation and can preferably be coupled to the design generator.

In the next step S5, the user's perception in response to the presented generated design is measured by means of a perception capturing unit. The generated design is for example visualized and presented to a user on a screen. Perception data are for example measured by using an electroencephalogram. Hence, a reaction of the user is measured by sensors measuring the electrical activity of the brain. By means of the perception capturing unit, the perception of the user can be quantified outputting sensor data, such that a perception evaluation indicator can be deduced from the sensor data. In other words, measuring the brain activity using an electroencephalogram, the level of attractivity of the generated design can be quantified. Alternatively, the user's perception in response to the presented generated design can be measured by means of a perception capturing unit configured to track points of gaze or the motion of an eye relative to the head. Based on such eye tracking data, the perception of the user can be quantified.

In order to find an optimized design for a technical system or product with respect to physical performance and user's perception, the performance indicator and/or the perception evaluation indicator are iteratively optimized by means of a multi-objective optimization algorithm in step S6. The optimization algorithm can comprise a heuristic method, e.g., a genetic algorithm, and/or a gradient-based method, e.g., gradient descent method. The iterative optimization comprises the steps of generating a design depending on a set of first and second parameters (step S2), obtaining a performance indicator (step S3), presenting the generated design to a user (step S4), and measuring perception data in response to the presentation and deducing a perception evaluation indicator (step S5), wherein at least one first parameter and/or at least on second parameter is modified for each optimization loop. In other words, the said method steps are iterated for a different set of first and second parameters until an optimum or limit of the performance indicator and perception evaluation indicator is found. Preferably, a threshold or constraints are defined in order to determine an optimized design if the optimization algorithm does not converge or if computing time is limited.

In the next step S7, the corresponding optimized design, corresponding to the optimized performance indicator and optimized perception evaluation indicator is outputted. The optimized design can preferably be provided as a document, data structure or in another computer-readable format.

The optimized design can for example be stored in a database or storage unit, step S8. Therefore, a variety of optimized designs can be created and further used as a database for training a machine learning algorithm for selecting a preferred design.

Alternatively, the optimized design can be transferred to a manufacturing device, preferably an additive manufacturing system for manufacturing the technical system or product according to the optimized design. In that way, an individualized technical system or product can be produced in correspondence with a specific user's taste or preference.

Figure 2 shows a schematic representation of an embodiment of a computer-implemented method for generating a design for a technical system or a product, e.g., a car design. In particular, Figure 2 shows the iterative optimization loop for finding the optimized design. Depending on a selected or given set of first parameters P1, specifying physical properties of a car, and second parameters P2 specifying perceptible properties of the car, a design for the car is generated by means of a design generator 103. The design generator 103 can be coupled with a computing unit, e.g., implemented as a cloud CL, in order to exchange information and data. The computing unit CL can be configured to obtain a performance indicator KPI1 based on the generated design, for example by using a computer-aided physical simulation. By means of the physical simulation of the car, the physical performance can be evaluated and quantified.

The generated design of the car is transferred to a user interface 104, e.g., a screen, wherein the generated design is visualized and presented to a user. The user interface 104 enables the interaction with the user providing information about the car and providing a stimulus, e.g., a visual stimulus. The user's perception is quantified by measuring perception data PD with a perception capturing device 105. The perception capturing device 105 can for example be configured as an eye tracking system, measuring fixation points in time and/or space, or a consumer electroencephalogram measuring brain activity as response to the presentation. A perception evaluation indicator KPI2 can be deduced from the perception data PD. The perception data PD can for example be further analyzed using a predefined activity threshold or similar.

The perception capturing unit can also comprise a processing unit to condense a number of input factors to one number or a set of numbers or measures. Using this unit, an emotional response regarding a product which occurs due to a visual interaction device displaying a product, for e.g., aesthetics of the product, can be quantified into a meaningful number.

The generated design is evaluated based on the performance indicator KPI1 and the perception evaluation indicator KPI2. Based on the result of the evaluation, a different parameter set can be selected, and an optimized design is determined.

In order to obtain an optimized design D_opt in accordance with an optimum physical and/or functional performance and user's preferences, the shown steps are iteratively performed wherein first and/or second parameters are modified until an optimized design D_opt is found and can be outputted. If for example the performance indicator KPI1 is already at an optimum, whereas the perception evaluation indicator KPI2 has not reached an optimum, at least one of the second parameters can be modified and a modified design can be generated and evaluated and so forth.

Given a set of physical design targets, e.g. "minimize weight" or "reduce energy consumption", combined with aesthetically design targets, e.g. maximize the aesthetics measure, the design generator generates a new design proposal by means of an optimization algorithm. The new design proposal is then evaluated by means of a physical or functional simulation with respect to its physical design performance and by means of the perception capturing unit with respect to its aesthetics.

Furthermore, the performance indicator KPI1 and/or the perception evaluation indicator KPI2 can be weighted according to given criteria. For example, a user can provide a prioritization and weights are set accordingly. The weighted performance indicator KPI1 and/or weighted perception evaluation indicator KPI2 can further be used for the optimization.

The design space can be only a few first and/or second parameters, e.g., ratio of length and width, size of certain features or a complete free form optimization process such as shape or topology optimization.

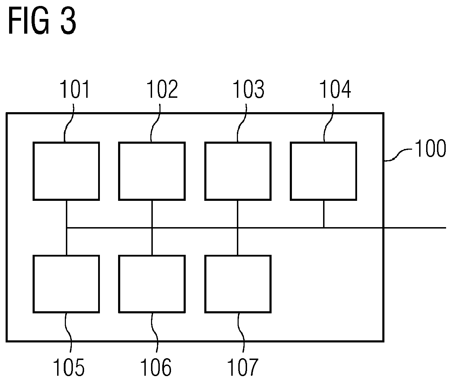

Figure 3 shows an apparatus 100 according to the invention as a schematic block diagram. The apparatus 100 comprises an interface unit 101, a design generator 102, a computing unit 103, a user interface 104, a perception capturing unit 105, an optimization unit 106, and an output unit 107. Alternatively, the respective units can be separately configured and coupled with each other in order to exchange data.

The apparatus 100 is preferably coupled with an additive manufacturing system (not shown) such that the found optimized design can be directly transferred and manufactured. This setup preferably enables manufacturing of individualized products.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for generating a design for a technical system or for a product, comprising the method steps:
(a) providing (S1) a set of first parameters (P1) specifying physical properties and second parameters (P2) specifying perceptible properties of the technical system or product,
(b) generating (S2) a design for the technical system or product depending on the set of first and second parameters (P1, P2),
(c) obtaining (S3) a performance indicator (KPI1) that evaluates a physical performance of the generated design,
(d) outputting (S4) a presentation of the generated design of the technical system or product by means of a user interface (104),
(e) measuring (S5) perception data (PD) in response to the presentation of the generated design by means of a perception capturing unit (105) and deducing a perception evaluation indicator (KPI2) from the measured perception data,
(f) iteratively (S6) optimizing the performance indicator (KPI1) and/or the perception evaluation indicator (KPI2) by means of an optimization algorithm, wherein at least one first parameter (P1) and/or at least one second parameter (P2) is adjusted and the method steps (b) to (e) are repeated,
and
(g) outputting (S7) an optimized design (D_opt).

2. Computer-implemented method according to claim 1, wherein a computer-aided physical or functional simulation of the technical system or product is performed depending on the generated design and wherein the performance indicator is obtained from the computer-aided physical or functional simulation.

3. Computer-implemented method according to one of the preceding claims, wherein the presentation of the generated design comprises a visualization and/or an olfactory test and/or a sound test and/or a haptic test.

4. Computer-implemented method according to one of the preceding claims, wherein the optimization algorithm comprises a heuristic method and/or a gradient-based method.

5. Computer-implemented method according to one of the preceding claims, wherein the generated and/or optimized design (D_opt) are stored (S8) in a storage unit or a database.

6. Computer-implemented method according to one of the preceding claims, wherein a weight is allocated to the performance indicator and/or a weight is allocated to the perception evaluation indicator and the optimization is performed taking the respective weight into account.

7. Computer-implemented method according to one of the preceding claims, wherein a variety of designs are used as training data for training a machine learning method for determining an optimized design.

8. Computer-implemented method according to one of the preceding claims, wherein the optimized design (D_opt) is transferred (S9) to an additive manufacturing system for manufacturing the technical system or product by the additive manufacturing system using the optimized design (D_opt).

9. Apparatus (100) for generating a design for a technical system or a product, comprising:
- an interface unit (101) configured to provide a set of first parameters (P1) specifying physical properties and second parameters (P2) specifying perceptible properties of the technical system or product,
- a design generator (102) configured to generate a design for the technical system or product depending on the set of first and second parameters (P1, P2),
- a computing unit (103) configured to obtain a performance indicator (KPI1) that evaluates the physical performance of the generated design,
- a user interface (104) configured to output a presentation of the generated design of the generated design of the technical system or product,
- a perception capturing unit (105) configured to measure perception data (PD) in response to the presentation of the generated design and to deduce a perception evaluation indicator (KPI2) from measured perception data (PD),
- an optimization unit (106) configured to iteratively optimize the performance indicator (KPI1) and/or the perception evaluation (KPI2) indicator by means of an optimization algorithm
and
- an output unit (107) configured to output an optimized design (D_opt).

10. Apparatus (100) according to claim 9, wherein the computing unit (103) is configured to perform a computer-aided physical or functional simulation of the technical system or product depending on the generated design and to obtain a performance indicator from the computer-aided physical or functional simulation.

11. Apparatus (100) according to claims 9 or 10, wherein the apparatus (100) is connected to an additive manufacturing device.

12. Computer program product directly loadable into the internal memory of a digital computer, comprising software code portions for performing the steps of one of the claims 1 to 8 when said computer program product is run on a computer.
